# EUROPÄISCHE PATENTANMELDUNG

(11) **EP 1 407 900 A1**
(43) Veröffentlichungstag der Anmeldung: **14.04.2004**
(21) Anmeldenummer: 03022120.4
(22) Anmeldetag: 30.09.2003
(51) Int. Cl.: B60D 1/14, B60D 1/52

(54) **Abschleppöse für ein Kraftfahrzeug**

(30) Priorität: 10.10.2002 DE 10247377
(71) Anmelder: Kamax-Werke Rudolf Kellermann GmbH & Co. KG, 37520 Osterode am Harz (DE)
(72) Erfinder: Frischkorn, Harald, 35315 Hornberg (DE); Hartmann, Gunther, Dr., 36304 Alsfeld (DE); Sommer, Wolfgang, 35285 Gemünden (Wohra) (DE); Wagner, Frank, 35418 Grossen Buseck (DE)
(74) Vertreter: Patentanwälte Rehberg + Hüppe

(57) **Zusammenfassung**

Eine Abschleppöse für ein Kraftfahrzeug weist einen langgestreckten Stabteil (2) auf, der mit seinem einen Endbereich mit dem Kraftfahrzeug verbindbar ist und der am anderen Ende (5) eine Öse (3) zum Angriff eines Abschleppmittels aufweist. Der Stabteil (2) der Abschleppöse (1) weist einen zumindest auf einem Teil seiner Länge hohl ausgebildeten Querschnitt (4) auf.

## Beschreibung

Die Erfindung betrifft eine Abschleppöse für ein Kraftfahrzeug, mit einem langgestreckten Stabteil, der mit seinem einen Endbereich mit dem Kraftfahrzeug verbindbar ist und der am anderen Ende eine Öse zum Angriff eines Abschleppmittels aufweist. Insbesondere bezieht sich die Erfindung auf eine Abschleppöse mit einem langgestreckten Stabteil, an den sich am einen freien Ende ein Gewindeabschnitt zum Einschrauben der Abschleppöse in eine an der Struktur des Kraftfahrzeuges angeordnete Mutter und am anderen freien Ende eine Öse zum Angriff eines Abschleppmittels anschließen. Derartige Abschleppösen sind insbesondere für Personenkraftfahrzeuge in Gebrauch. Sie werden in demontiertem Zustand im Kraftfahrzeug mitgeführt und bei Bedarf vorn oder hinten an einem Kraftfahrzeug durch einen Schraubvorgang befestigt. Die Befestigung geschieht durch Einschrauben des Gewindeabschnitts in das Innengewinde einer Mutter, die in der Regel an der tragenden Struktur des Kraftfahrzeugs, beispielsweise einem Längs- oder Querträger, angeordnet ist, der sich in einiger Entfernung von der äußeren Hülle des Kraftfahrzeugs, insbesondere einem Stoßfänger, befindet. Um diese Entfernung bis zu der Mutter zu überbrücken, muss die Abschleppöse einen entsprechend langgestreckten Stabteil aufweisen, mit dem sie durch eine freilegbare Öffnung im Stoßfänger hindurchreichend sich bis in die Mutter hinein erstreckt. Die Öse oder ein entsprechendes anderes Element in Form eines Hakens o. dgl. dient dem Angriff eines Abschleppmittels, insbesondere eines Abschleppseils, zwischen dem ziehenden und dem gezogenen Fahrzeug. Da zwei auf diese Art und Weise verbundene Fahrzeuge sich auch in Kurvenfahrt bewegen, wird die Abschleppöse nicht nur auf Zug, sondern auch auf Biegung belastet, so dass in Form des langgestreckten Stabteils durchaus erhebliche Biegemomente auf solche Abschleppösen in Gebrauchsstellung einwirken können. Solche Abschleppösen sind deshalb in aller Regel als metallene Formteile ausgebildet und besitzen eine biegesteif gestaltete Form.

### STAND DER TECHNIK

Eine Abschleppöse der eingangs beschriebenen Art ist aus der DE 199 33 652 A1 oder auch der DE 44 09 290 A1 bekannt. Die Abschleppöse besitzt einen langgestreckten Stabteil, der stangenförmig mit einem Vollquerschnitt ausgebildet ist. Die Abschleppöse ist einstückig ausgebildet, indem im einen Endbereich auf den stangenförmigen Querschnitt ein Gewindeabschnitt aufgeformt ist. Ebenso ist das andere freie Ende des Stabteils zu einer Öse umgeformt. Da solche Abschleppösen in der Regel aus Metall bestehen, sind sie oft als Schmiedeteil ausgebildet, wobei die Bildung der Öse während des Schmiedens erfolgt, während der Gewindeabschnitt in einem weiteren Arbeitsgang aufgebracht wird.

Es ist auch eine Abschleppöse bekannt, die als einstückiges Schmiedeteil hergestellt wird und im Stabteil zur Gewichtsreduzierung bei gleichzeitig biegesteifer Ausbildung einen Vollquerschnitt besitzt, der etwa nach Art eines vierblättrigen Kleeblatts oder Sterns begrenzt bzw. gestaltet ist. Solche Schmiedeteile sind vergleichsweise aufwändig in der Herstellung und entsprechend teuer.

### AUFGABE DER ERFINDUNG

Der Erfindung liegt die Aufgabe zugrunde, eine Abschleppöse der eingangs beschriebenen Art bereitzustellen, die einerseits biegesteif ausgebildet ist, mit ihrem Stabteil eine gewisse axiale Erstreckung überbrückt, trotzdem ein geringes Gewicht aufweist und preiswert herstellbar ist.

### LÖSUNG

Erfindungsgemäß wird dies bei einer Abschleppöse der eingangs beschriebenen Art dadurch erreicht, dass der Stabteil der Abschleppöse einen zumindest auf einem Teil seiner Länge hohl ausgebildeten Querschnitt aufweist.

### BESCHREIBUNG DER ERFINDUNG

Die Erfindung geht von dem Gedanken aus, den Stabteil der Abschleppöse ganz oder teilweise als Hohlkörper auszubilden. Ein solcher hohler Querschnitt besitzt vorteilhaft ein relativ geringes Gewicht und trotzdem eine hohe Biegesteifigkeit, da die Materialanhäufung durch den hohlen Querschnitt auf einen entsprechenden Abstand um die Achse des langgestreckten Stabteils verteilt angeordnet wird. Der hohle Querschnitt kann am einen Ende des Stabteils beginnen, z.B. durch eine Napfung erstellt sein. Alternativ oder zusätzlich kann der hohle Querschnitt auch am anderen Ende des Stabteils beginnen. Schließlich kann der hohle Querschnitt auch über die Länge des Stabteils durchgehend vorgesehen sein, wie dies bei einem Rohrabschnitt der Fall ist. Um biegesteife Eigenschaften in allen Richtungen quer zur Achse des Stabteils zu erzielen, bietet sich als Optimum ein kreisringförmiger Querschnitt, also ein Rohrquerschnitt, an, zumindest für den Teil des Stabteils, der hohl ausgebildet ist. Dies schließt natürlich nicht aus, dass der Stabteil über seine wesentliche Länge oder auch ganz hohl ausgebildet bzw. gestaltet ist. Eine solche hohle Gestaltung insbesondere mit einem kreisringförmigen Querschnitt ermöglicht es außerdem, die Abschleppöse in ein entsprechend kreisförmig gestaltetes Loch bzw. eine Öffnung in einem Stoßfängerteil, welches der tragenden Struktur des Fahrzeugs beabstandet angeordnet ist, einzubringen und z. B. auch an dem Stoßfänger gegen Biegekräfte zusätzlich abzustützen. Der hohle Querschnitt des Stabteils kann auch direkt zum Anschluss eines Bolzens mit einem Gewindeabschnitt und/oder zum Anschluss einer Öse genutzt werden. Damit entsteht die Möglichkeit, die Öse preiswert aus einem entsprechend gebogenen Abschnitt eines Metalldrahts einzusetzen. Es versteht sich, dass der Stabteil und die Öse aus einem entsprechenden Metall hergestellt werden, welches verschweißbar, insbesondere widerstandsverschweißbar, ist.

Somit kann die Öse aus einem gebogenen Drahtabschnitt bestehen, deren beide Enden mit dem Stabteil fest verbunden, insbesondere verschweißt, sind. Die Öse kann auch als Schmiedeteil erstellt sein. Die dauerhafte drehsteife Verbindung zwischen Öse und Stabteil kann auch durch Vercrimpen, durch Einbringen eines Querstiftes o. dgl. erreicht werden. Je nach dem, wo sich der hohle Querschnittsbereich des Stabteils befindet, sind die Enden des gebogenen Drahtabschnitts entweder außen oder innen mit dem Stabteil verschweißt. Auch besteht die Möglichkeit, die Wandung des Stabteils mit Ausnehmungen, Ausstanzungen o. dgl. zu versehen und die beiden Enden des Drahtabschnitts dort dauerhaft festzulegen.

Vorteilhaft ist es, wenn der Stabteil zumindest in seinem der Öse zugekehrten Endbereich den hohlen Querschnitt aufweist. In diesem Falle empfiehlt es sich, die beiden Enden des die Öse bildenden Drahtabschnitts in den hohlen Querschnitt des Stabteils einzubringen und dort innen festzuschweißen. Die beiden Enden der Öse sind dann im Innern des Stabteils untergebracht, so dass insoweit keine nach außen abstehenden Kanten oder vorstehende Stellen entstehen, die Anlass für eine Verletzung sein könnten.

Der Stabteil kann an seinem der Öse abgekehrten Ende einen Gewindeabschnitt aufweisen, wobei der Stabteil in seinem dem Gewindeabschnitt abgekehrten Endbereich genapft ausgebildet ist. Besonders vorteilhaft ist es, wenn der Stabteil und der Gewindeabschnitt einstückig ausgebildet sind, sich also der Gewindeabschnitt an dem Stabteil befindet. Stabteil und Gewindeabschnitt werden aus einem Materialabschnitt, beispielsweise einem Drahtabschnitt in Form eines Rohlings, geformt. Die Formung geschieht vorteilhaft durch spanloses Umformen, indem der Durchmesser des Rohlings in seinem einen Endbereich genapft wird und im anderen Endbereich ein Außengewinde aufgerollt wird. Durch das Napfen wird das Material des Rohlings in diesem Bereich spanlos umgeformt, wobei Materialbereiche auf einen insoweit größeren Durchmesser zu der Achse des Mittelbereichs verschoben werden. Dies ist für eine biegesteife Ausbildung der Abschleppöse nur förderlich und schafft in dem so gebildeten Napf auch vorteilhaft die Voraussetzungen, zwei Enden des die Öse bildenden Drahtabschnitts zum Zwecke der Verschweißung innen anzuordnen und zu verschweißen. Ein solcher Napf kann durchaus eine beachtliche Länge erhalten bzw. sich über eine solche Länge erstrecken, wobei durchaus mehrere Zentimeter überbrückt werden können, so dass trotz relativ großer axialer Länge der Abschleppöse eine beachtliche Gewichtsreduzierung durch den Napf erfolgt. Es besteht aber auch die Möglichkeit, den Gewindeabschnitt an einem dritten Teil, beispielsweise einem Bolzen, zu verwirklichen und dann auch den Bolzen mit dem Stabteil zu verbinden.

Besonders vorteilhaft ist es, wenn der hohl ausgebildete Querschnitt des Mittelteils kreisringförmig gestaltet ist. Damit lassen sich einerseits hohe Umformgrade erzielen und andererseits eine Gestaltung herbeiführen, die nach allen Seiten gleiche Biegesteifigkeit aufweist.

Die Abschleppöse kann auch dreiteilig ausgebildet sein, d.h. aus drei Teilen zusammengefügt sein. Der Gewindeabschnitt ist dann z.B. an einem Bolzen vorgesehen.

Der Stabteil und der Bolzen sind fest miteinander verbunden, insbesondere verschweißt. Unabhängig davon ist die Verbindung zwischen Öse und Stabteil. Alternativ können beide Verschweißungen auch zeitgleich angewendet werden, so dass gleichsam eine Abschleppöse durch die beiden Verschweißungen aus drei Teilen auf einmal zusammengefügt wird. In Verbindung damit ist es dann besonders vorteilhaft, wenn der Stabteil aus einem Rohrabschnitt besteht, also über seine gesamte axiale Erstreckung einen hohlen Querschnitt besitzt. Solche Rohrabschnitte als Stabteil lassen sich besonders vorteilhaft durch Ablängen eines Rohres herstellen, wobei zusätzlich der Vorteil besteht, dass je nach der Länge des Rohrabschnitts Abschleppösen für unterschiedliche Kraftfahrzeuge mit unterschiedlicher erforderlicher Länge herstellbar sind.

Alternativ kann der Stabteil aber auch aus einem beidendig genapften Formteil bestehen, um dann einerseits eine Öse und andererseits einen Bolzen mit Gewindeabschnitt anzuschweißen.

Der Stabteil kann auch aus einem Abschnitt eines hohlen Strangpressprofils mit biegesteif ausgebildetem Querschnitt bestehen. Ein solcher Querschnitt muss nicht unbedingt kreisringförmig gestaltet sein. Auch Querschnitte nach Art eines Vierkantrohres, mit oval gestaltetem Ringquerschnitt u. dgl. sind denkbar. Schließlich ist es auch möglich, dass der Stabteil zur Ausbildung des hohlen Querschnitts einerseits und einer Anschlussstelle für die Aufnahme der Enden des die Öse bildenden Drahtabschnitts andererseits doppelt genapft ausgebildet ist, wobei gleichsam die beiden Näpfe aneinander anschließen und damit ein hohler, gleichsam gestufter oder jedenfalls zur Aufnahme der Enden des Drahtabschnitts der Öse angepasster Querschnitt entsteht.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Ansicht der Abschleppöse in einer ersten Ausführungsform, teilweise geschnitten.
- **Fig. 2**: zeigt eine Ansicht der Abschleppöse gemäß Fig. 1, um 90° gedreht mit eingeschweißter Öse.
- **Fig. 3**: zeigt eine Ansicht einer zweiten Ausführungsform der Abschleppöse mit geschnitten dargestelltem Stabteil.
- **Fig. 4**: zeigt die Abschleppöse gemäß Fig. 3 um 90° gedreht.
- **Fig. 5**: zeigt einen Schnitt gemäß der Linie V-V in Fig. 4.
- **Fig. 6**: zeigt eine dritte Ausführungsform der Abschleppöse.
- **Fig. 7**: zeigt die Abschleppöse gemäß Fig. 6, um 90° gedreht.
- **Fig. 8**: zeigt einen Schnitt gemäß der Linie VIII-VIII in Fig. 7.
- **Fig. 9**: zeigt eine weitere zweiteilige Abschleppöse mit geschnitten dargestelltem Stabteil.
- **Fig. 10**: zeigt die Abschleppöse gemäß Fig. 9, um 90° gedreht.
- **Fig. 11**: zeigt eine weitere Ausführungsform einer zweiteiligen Abschleppöse.
- **Fig. 12**: zeigt eine dreiteilige Abschleppöse.
- **Fig. 13**: zeigt eine weitere dreiteilige Abschleppöse.
- **Fig. 14**: zeigt eine weitere dreiteilige Abschleppöse mit Crimpverbindungen.
- **Fig. 15**: zeigt eine dreiteilige Abschleppöse unter Verwendung eines Stabteils mit einem Querschnitt aus Rechteckrohr.
- **Fig. 16**: zeigt einen Schnitt gemäß der Linie XVI-XVI in Fig. 15.
- **Fig. 17**: zeigt einen Schnitt gemäß der Linie XVII-XVII in Fig. 15.
- **Fig. 18**: zeigt eine zweiteilige Abschleppöse mit doppelter Napfung.
- **Fig. 19**: zeigt eine weitere Abschleppöse mit doppelter Napfung.

### FIGURENBESCHREIBUNG

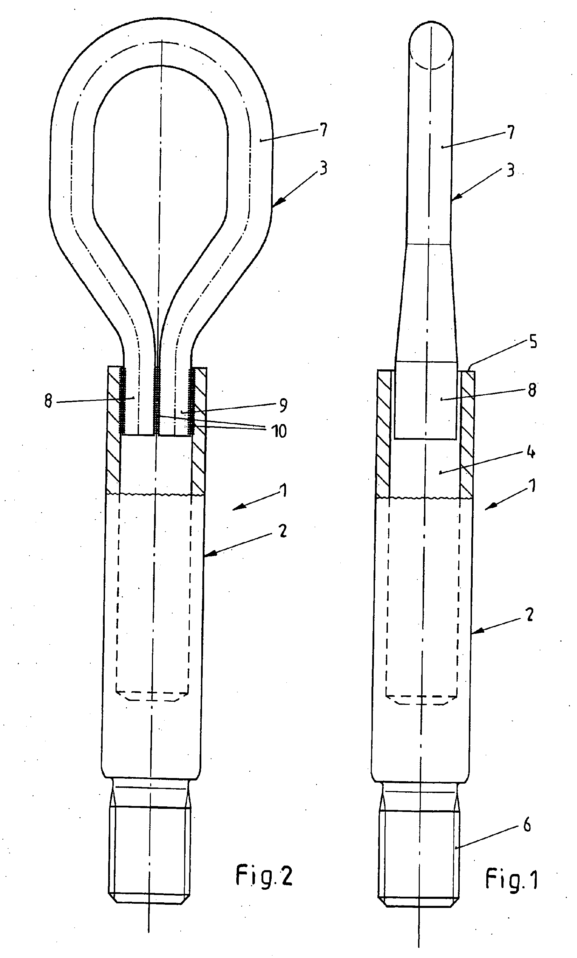

**Fig. 1** zeigt eine Abschleppöse 1, die hier aus zwei Teilen zusammengefügt wird. Der eine Bestandteil ist ein Stabteil 2. Der andere Bestandteil ist eine Öse 3. Der Stabteil 2 besitzt langgestreckte stabförmige Gestalt. Er überbrückt eine Länge, die sich durchaus im Bereich zwischen 10 und 20 cm erstrecken kann, um weit ausladende Karosserieteile, beispielsweise Stoßfängerkonstruktionen, durchsetzen zu können. Der Stabteil 2 besteht aus Metall, insbesondere schweißbarem Stahl, und ist auf Zug, Druck und Biegung belastbar ausgebildet. Der Stabteil 2 ist über einen Großteil seiner axialen Erstreckung hohl ausgebildet. Er besitzt einen hohlen Querschnitt 4. Der hohle Querschnitt 4 ist hier durch eine Napfung des Stabteils 2 erstellt, die stirnseitig an dem der Öse 3 zugekehrten Ende 5 des Stabteils 2 beginnt und sich in Richtung auf das andere Ende mit einer wesentlichen Länge erstreckt. Diese hohle Ausbildung des Stabteils 2 erbringt eine Gewichtsreduzierung, wie sie bei Kraftfahrzeugteilen bedeutungsvoll ist, gleichzeitig hoher Beanspruchbarkeit des Stabteils auf Biegung. Der Stabteil 2 weist an seinem der Öse 3 abgekehrten Ende einen Gewindeabschnitt 6 auf, mit dem er in ein Innengewinde an der tragenden Struktur des Kraftfahrzeugs einschraubbar ist. Der Gewindeabschnitt 6 kann unter Aufrollen des Gewindes auf den Rohling des Stabteils 2 erstellt sein.

Die Öse 3 kann, wie in den **Fig. 1 und 2** dargestellt, aus einem gebogenen Drahtabschnitt 7 bestehen, dessen beide Enden 8 und 9 abgeflacht ausgebildet sind, so dass der gemeinsame Umfang der Enden 8 und 9 angenähert kreisförmig verformt ist. Dies ermöglicht es, die beiden Enden 8 und 9 in den hohlen Querschnitt des Stabteils 2 einzuführen (Fig. 1) und mit dem Stabteil 2 unlösbar und drehsteif zu verbinden, beispielsweise durch Verschweißungen 10. Zu diesem Zweck besteht auch die Öse 3 bzw. der Drahtabschnitt 7 aus verschweißbarem Material. Die Verschweißungen 10 können durch Widerstandsschweißen erstellt werden.

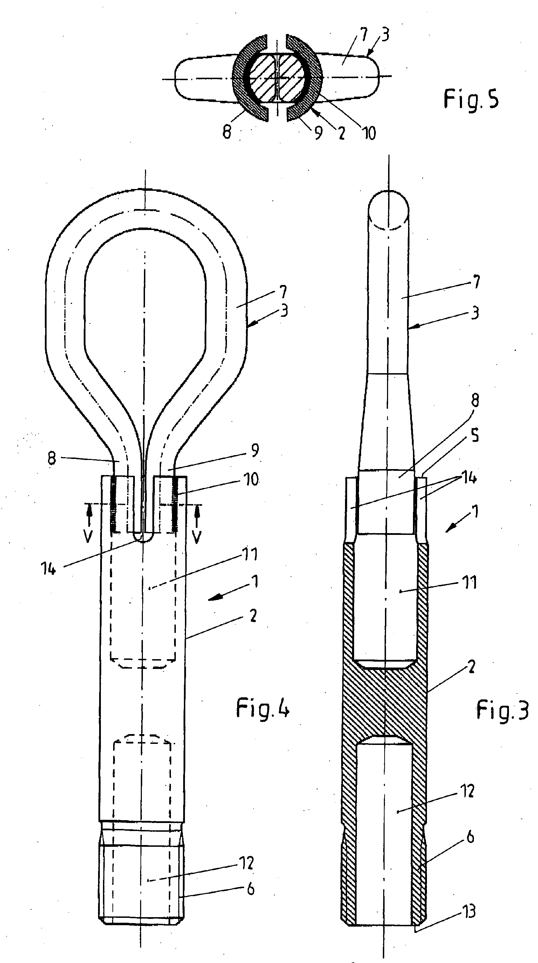

In den **Fig. 3 bis 5** ist eine weitere Ausführungsform einer zweiteiligen Abschleppöse 1 dargestellt. Das Stabteil 2 ist hier zum Zwecke einer weiteren Gewichtseinsparung doppelseitig genapft, d. h. es ist ein erster Napf 11 vom Ende 5 her und ein zweiter Napf 12 von dem Ende 13 her in den Stabteil 2 eingeformt. Im Bereich dieses anderen Endes 13 beginnt auch der Gewindeabschnitt 6. Da die Tiefe der Napfungen, die axial an dem Rohling des Stabteils 2 durchgeführt werden müssen, herstellungstechnisch begrenzt ist, bietet die Anordnung der beiden Näpfe 11 und 12 die Möglichkeit einer erheblichen Gewichtsreduzierung bei erheblicher axialer Länge des Stabteils 2.

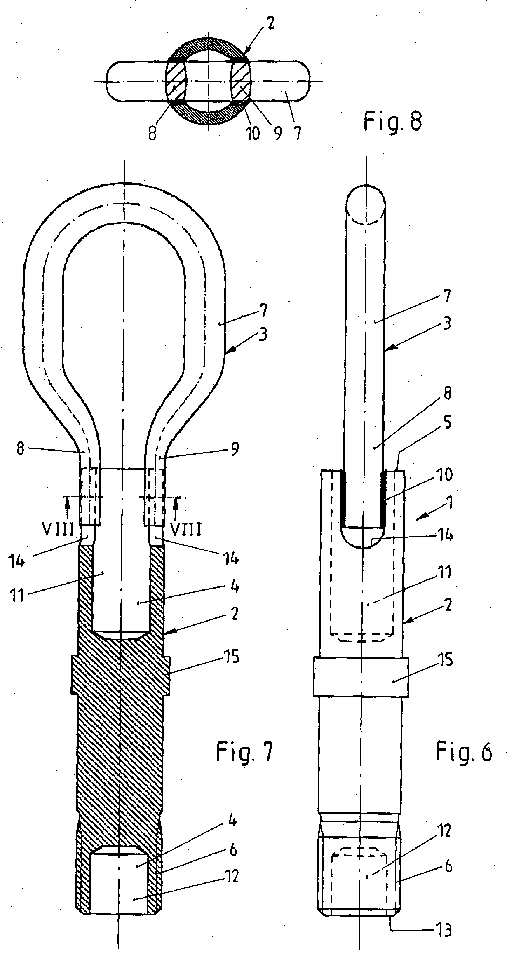

In dem der Öse 3 zugekehrten Ende 5 des Stabteils 2 können randoffene Ausstanzungen 14 vorgesehen sein, die eine etwa U-förmige Begrenzung (Fig. 4) haben können. Durch diese Ausstanzungen 14 wird das der Öse 3 zugekehrte Ende des Stabteils 2 etwas elastischer ausgebildet, was die Anbringung der Verschweißungen 10 begünstigt. Der besondere Querschnitt der beiden Enden 8 und 9 des Drahtabschnitts 7 ist aus Fig. 5 erkennbar. Alternativ und/oder zusätzlich können die Ausstanzungen 14 auch zur Anbringung einer Verschweißung in diesem Bereich genutzt werden.

Die **Fig. 6 bis 8** zeigen eine weitere Ausführungsmöglichkeit einer zweiteiligen Abschleppöse 1. Auch hier besitzt der Stabteil 2 die beiden Näpfe 11 und 12. Der Napf 12 ist axial etwas kürzer ausgebildet und verläuft innerhalb der axialen Erstreckung des Gewindeabschnitts 6. Der Stabteil 2 besitzt einen vorstehenden Mittelbund 15, der zu einer Abstützung der Abschleppöse an dem Kraftfahrzeugvorbau bei Biegebeanspruchung genutzt werden kann. Die Ausstanzungen 14 sind hier etwas breiter ausgebildet. Die Enden 8 und 9 der Öse 3 sind in ihrem Querschnitt so verformt, wie dies Fig. 8 erkennen lässt. Darüber hinaus sind die Enden 8 und 9 auf einem solchen gegenseitigen Abstand angeordnet, also die Öse 3 vergleichsweise weiter aufgebogen, dass die Enden 8 und 9 in die Ausstanzungen 14 eingefügt und durch die Verschweißungen 10 dort dauerhaft mit dem Stabteil 2 verbunden sind. Auch bei dieser Konstruktion werden radial nach außen über den Umfang des Stabteils vorstehende Bereiche der Enden 8 und 9 der Öse 3 vermieden.

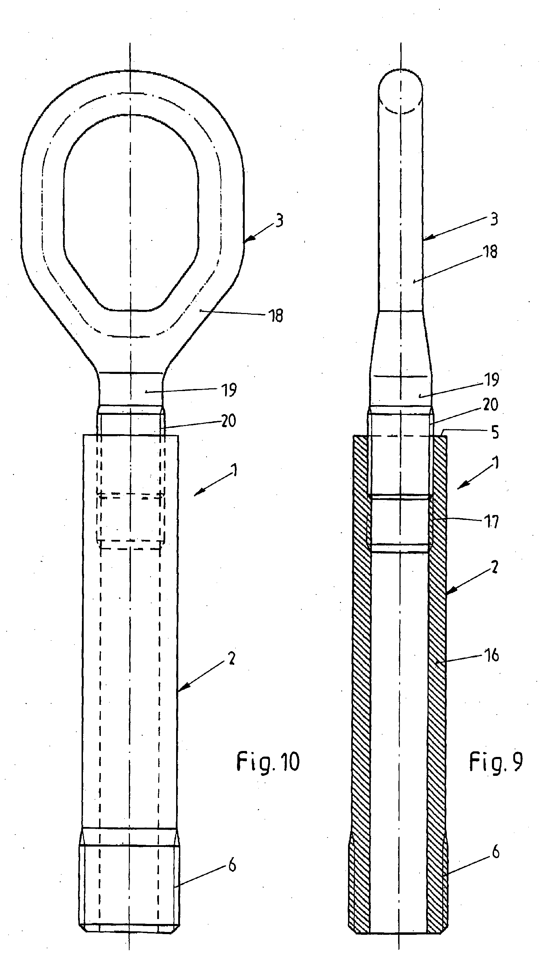

In den **Fig. 9 und 10** ist eine weitere Ausführungsform einer zweiteiligen Abschleppöse 1 dargestellt. Als Rohling für den Stabteil 2 dient ein Rohrabschnitt 16, der an seinem einen Ende 5 beginnend einen Innengewindeabschnitt 17 aufweist. Die Öse 3 ist hier als Schmiedeteil 18 ausgebildet und weist an einem dem Stabteil zugekehrten Fortsatz 19 ein Außengewinde 20 auf. Die Steigung des Innengewindes 17 ist unterschiedlich zu der Steigung des Außengewindes 20 gewählt, damit bei dem Einschrauben der Öse 3 in den Stabteil 2 eine feste verdrehgesicherte Verbindung entsteht. Die Verwendung eines Rohrabschnitts 16 als Rohling für den Stabteil ist besonders kostengünstig. Es versteht sich, dass ein solcher Rohrabschnitt 16 auch bei den anderen Ausführungsformen der Abschleppöse eingesetzt werden kann.

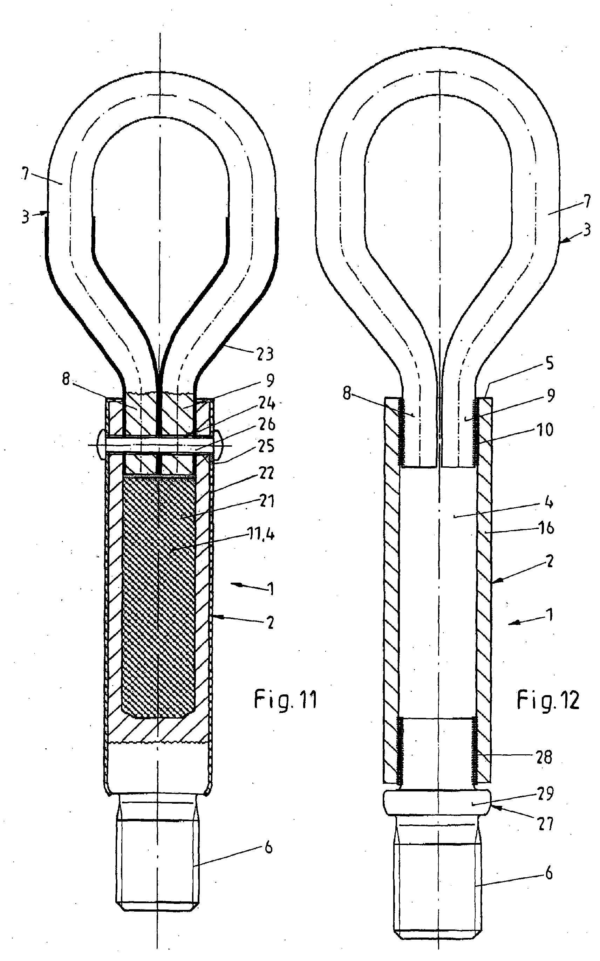

**Fig. 11** zeigt eine weitere Abschleppöse 1, deren Stabteil 2 nur den einen Napf 11 besitzt. Der Napf 11 ist weitgehend mit einem Kunststoffschaum 21 gefüllt, beispielsweise einem PU-Schaum, der korrosionsverhindernd wirkt. Auch außen kann der Stabteil 2 eine Ummantelung 22 aus Kunststoff, eine Schutzlackierung o. dgl. aufweisen. Auch die Enden 8 und 9 der Öse 3 können über einen relativ weiten Bereich eine Beschichtung 23 besitzen, die korrosionshemmend wirkt. Die Querschnitte der Enden 8 und 9 sind etwa so ausgebildet, wie dies Fig. 5 zeigt. Zusätzlich besitzen beide Enden 8 und 9 je eine fluchtende Durchbrechung 24. Entsprechende Durchbrechungen 25 sind fluchtend in der Wandung des Stabteils 2 mit dem hohlen Querschnitt 4 und in entsprechender Zuordnung vorgesehen, so dass die Befestigung hier durch einen Querstift 26, einen Niet o. dgl. erfolgen kann. Wenn vorstehende Nietköpfe im speziellen Anwendungsfall hinderlich sind, kann auch anstelle des Querstiftes 26 ein vergleichsweise kürzerer Bolzen mit Presspassung eingedrückt werden.

**Fig. 12** zeigt eine dreiteilige Abschleppöse 1. Die Abschleppöse 1 ist aus einem als Rohrabschnitt 16 ausgebildeten Stabteil 2, der Öse 3 und einem Bolzen 27 zusammengefügt. Die Öse 3 ist mit dem Rohrabschnitt 16 durch die Schweißungen 10 drehfest verbunden. Der Bolzen 27, der den Gewindeabschnitt 6 trägt, ist über eine Verschweißung 28 drehfest und dauerhaft in dem Stabteil 2 festgelegt. Ein Wulst 29 kann am Bolzen 27 angeformt sein, um das Einschieben des Bolzens 27 in den Rohrabschnitt 16 vor dem Anbringen der Verschweißung 28 zu begrenzen bzw. auszurichten.

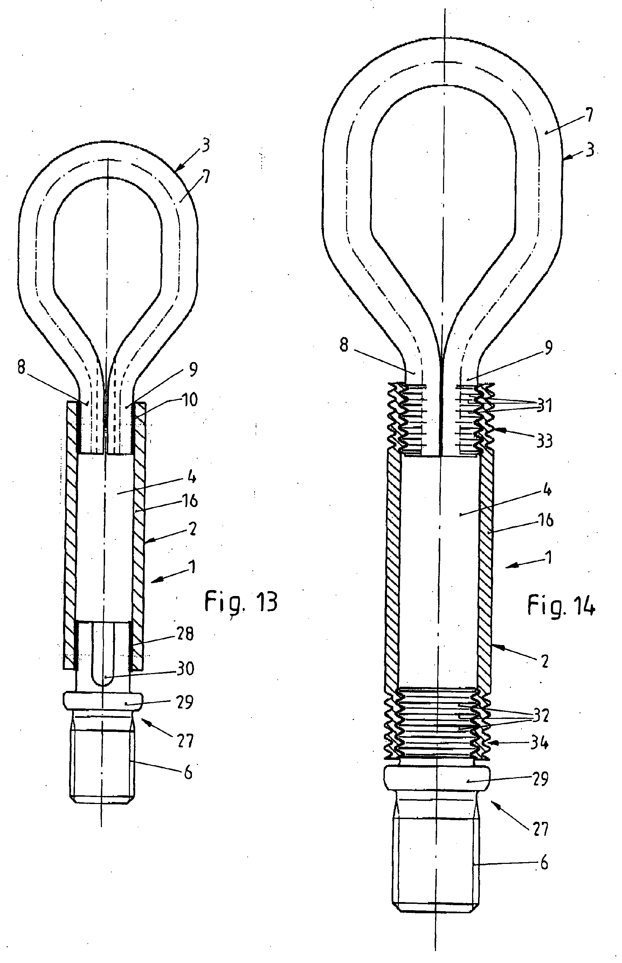

**Fig. 13** zeigt eine weitere Ausführungsform einer dreiteiligen Abschleppöse, die in weiten Bereichen ähnlich wie das Ausführungsbeispiel der Fig. 12 ausgebildet ist. Zusätzlich weist der Bolzen 27 in seinem Anschlussbereich an den Rohrabschnitt 16 Abflachungen 30 auf, so dass der Bolzen hier einen entsprechenden länglichen Querschnitt erhält und sich damit die Verschweißungen 28 nicht über den gesamten Umfang des Bolzens 27, sondern an zwei gegenüberliegenden Stellen erstrecken. Die Abflachungen 30 gewährleisten darüber hinaus eine Entlüftung des Hohlraums 4. Dies ist insbesondere für eine z. B. galvanisch aufzubringende Oberflächenbeschichtung sinnvoll.

**Fig. 14** zeigt eine weitere Ausführungsmöglichkeit einer dreiteiligen Abschleppöse 1 mit einem Stabteil 2 aus einem Rohrabschnitt 16 mit durchgehendem hohlen Querschnitt 4. Die Enden 8 und 9 der Öse 3 sind jeweils angenähert mit halbkreisförmigem einander zugekehrten Querschnitt geformt, so dass zumindest auf einem Bereich des Umfangs eine Oberfläche mit Hinterschneidungen und Vertiefungen gebildet werden kann. Dies kann in Form umlaufender Rippen 31 geschehen. Der entsprechende Teil des Bolzens 27 kann als Anschlussmittel ebenfalls solche Rippen 32, aber auch ein Grobgewinde o. dgl. besitzen. Die drehfeste und dauerhafte Verbindung zwischen den drei Teilen erfolgt durch zwei Vercrimpungen 33 und 34. Auch eine Quetschverbindung mit glatter, im Durchmesser reduzierter äußerer Oberfläche des Rohrabschnitts 16 an den beiden Verbindungsstellen wäre möglich.

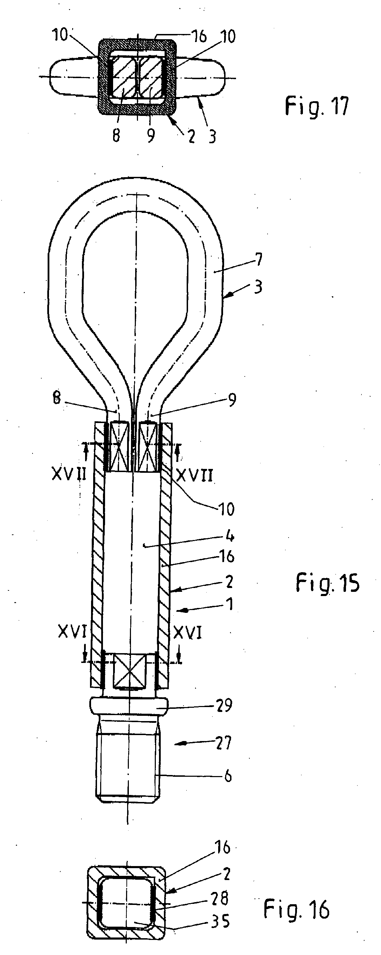

Auch das Ausführungsbeispiel der **Fig. 15 bis 17** ist dreiteilig ausgebildet. Der Rohrabschnitt 16 weist hier den Querschnitt eines Quadratrohres (Fig. 16) auf. Der Bolzen 27 besitzt an seinem dem Gewindeabschnitt 6 abgekehrten Endbereich einen abgerundet quadratischen Querschnitt 35, über den der Bolzen 27 innen mit dem Rohrabschnitt 16 verschweißt ist. Auch die beiden Enden 8 und 9 der Öse 3 besitzen einen auf den Querschnitt des Rohrabschnitts 16 abgestimmten Querschnitt (Fig. 17), der die Anbringung der Verschweißungen 10 beim dauerhaften Verbinden der Öse 3 und des Stabteils 2 begünstigt.

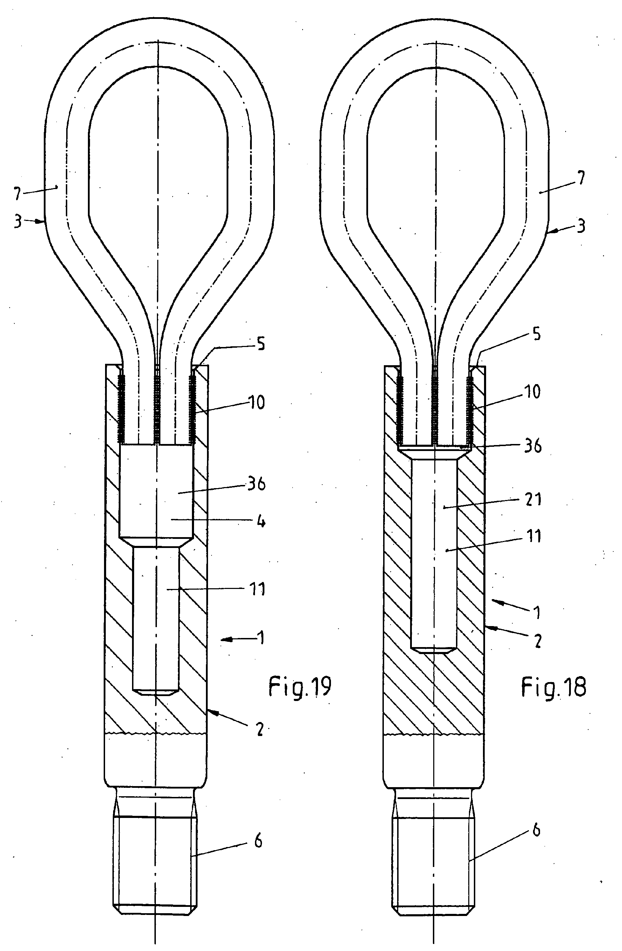

In den **Fig. 18 und 19** sind zwei zweiteilige Abschleppösen 1 dargestellt. Beide Stabteile 2 sind einseitig genapft. Es liegt hier jedoch eine Doppelnapfung vor, wobei in einem ersten Arbeitsschritt der Napf 11 geformt ist und von der gleichen Seite 5 her über den Napf 11 ein Napf 36 mit vergleichsweise größerem Durchmesser geformt ist. Diese Doppelnapfung hat herstellungstechnische Vorteile und ermöglicht es, dass das Material des Rohlings für den Stabteil 2 in axialer Richtung besonders weit fließt, also der Stabteil 2 eine besonders große axiale Länge erhält. Das Längenverhältnis zwischen den Näpfen 11 und 36 kann unterschiedlich gestaltet werden, wie ein Vergleich der Fig. 18 und 19 erkennen lässt. Die drehfeste dauerhafte Verbindung zwischen dem Stabteil 2 und der Öse 3 erfolgt auch hier über die Schweißungen 10.

Die Fig. 1 bis 18 zeigen eine Vielzahl von Einzelheiten, teilweise in einem zweistückigen Aufbau der Abschleppöse 1, teilweise in einer dreiteiligen Ausbildung. Im letzteren Falle ist die Verbindung der Öse 3 mit dem Stabteil 2 von der Verbindung des Stabteils 2 mit dem Bolzen 27 zu unterscheiden. Die dargestellten einzelnen Verbindungs- und Ausbildungsmöglichkeiten der Teile und Elemente können auch im Rahmen der aufgezeigten Möglichkeiten miteinander kombiniert werden, wie sich dies aus einer Zusammenschau der Fig. 1 bis 19 ergibt.

### BEZUGSZEICHENLISTE

- 1: Abschleppöse
- 2: Stabteil
- 3: Öse
- 4: hohler Querschnitt
- 5: Ende
- 6: Gewindeabschnitt
- 7: Drahtabschnitt
- 8: Ende
- 9: Ende
- 10: Verschweißung

- 11: Napf
- 12: Napf
- 13: Ende
- 14: Ausstanzung
- 15: Mittelbund
- 16: Rohrabschnitt
- 17: Innengewindeabschnitt
- 18: Schmiedeteil
- 19: Fortsatz
- 20: Außengewinde

- 21: Kunststoffschaum
- 22: Ummantelung
- 23: Beschichtung
- 24: Durchbrechung
- 25: Durchbrechung
- 26: Querstift
- 27: Bolzen
- 28: Verschweißung
- 29: Wulst
- 30: Abflachung

- 31: Rippe
- 32: Rippe
- 33: Vercrimpung
- 34: Vercrimpung
- 35: Querschnitt
- 36: Napf

## Patentansprüche

1. Abschleppöse für ein Kraftfahrzeug, mit einem langgestreckten Stabteil (2), der mit seinem einen Endbereich mit dem Kraftfahrzeug verbindbar ist und der am anderen Ende (5) eine Öse (3) zum Angriff eines Abschleppmittels aufweist, **dadurch gekennzeichnet, dass** der Stabteil (2) der Abschleppöse (1) einen zumindest auf einem Teil seiner Länge hohl ausgebildeten Querschnitt (4) aufweist.

2. Abschleppöse nach Anspruch 1, **dadurch gekennzeichnet, dass** die Öse (3) aus einem gebogenen Drahtabschnitt (7) besteht, deren beide Enden (8, 9) mit dem Stabteil (2) fest verbunden, insbesondere verschweißt, sind.

3. Abschleppöse nach mindestens einem der Ansprüche 1 bis 2, **dadurch gekennzeichnet, dass** der Stabteil (2) zumindest in seinem der Öse (3) zugekehrten Endbereich den hohlen Querschnitt (4) aufweist, und dass die beiden Enden (8, 9) des die Öse (3) bildenden Drahtabschnitts (7) in den hohlen Querschnitt (4) eingebracht und dort innen festgeschweißt sind.

4. Abschleppöse nach mindestens einem der Ansprüche 1 bis 3, **dadurch gekennzeichnet, dass** der Stabteil (2) an seinem der Öse (3) abgekehrten Ende (13) einen Gewindeabschnitt (6) aufweist, und dass der Stabteil (2) in seinem dem Gewindeabschnitt (6) abgekehrten Endbereich genapft ausgebildet ist.

5. Abschleppöse nach mindestens einem der Ansprüche 1 bis 4, **dadurch gekennzeichnet, dass** der hohl ausgebildete Querschnitt (4) des Stabteils (2) kreisringförmig gestaltet ist.

6. Abschleppöse nach mindestens einem der Ansprüche 1 bis 5, **dadurch gekennzeichnet, dass** die Abschleppöse (1) dreiteilig ausgebildet ist, dass der Gewindeabschnitt (6) an einem Bolzen (27) vorgesehen ist und dass der Stabteil (2) und der Bolzen (27) fest miteinander verbunden, insbesondere verschweißt, sind.

7. Abschleppöse nach mindestens einem der Ansprüche 1 bis 6, **dadurch gekennzeichnet, dass** der Stabteil (2) aus einem Rohrabschnitt (16) besteht.

8. Abschleppöse nach mindestens einem der Ansprüche 1 bis 7, **dadurch gekennzeichnet, dass** der Stabteil (2) aus einem beidendig genapften Formteil besteht.

9. Abschleppöse nach mindestens einem der Ansprüche 1 bis 8, **dadurch gekennzeichnet, dass** der Stabteil (2) aus einem Abschnitt eines hohlen Profilrohres mit biegesteif ausgebildetem Querschnitt (4) besteht.

10. Abschleppöse nach mindestens einem der Ansprüche 1 bis 9, **dadurch gekennzeichnet, dass** der Stabteil (2) zur Ausbildung des hohlen Querschnitts (4) einerseits und einer Anschlussstelle für die Aufnahme der Enden (8, 9) des die Öse (3) bildenden Drahtabschnitts (7) doppelt genapft ausgebildet ist.
